# EUROPEAN PATENT SPECIFICATION

(11) **EP 0 656 491 B1**
(45) Date of publication and mention of the grant of the patent: **10.05.2000**
(21) Application number: 94308172.9
(22) Date of filing: 07.11.1994
(51) Int. Cl.: F16H 57/12, F16H 55/24

(54) **Double acting dynamic backlash compensation driving system**
Antrieb mit doppelt wirkender dynamischer Spielunterdrückung
Entraînement avec rattrapage de dynamique bidirectionnel

(30) Priority: 02.12.1993 GB 9324790
(43) Date of publication of application: 07.06.1995
(73) Proprietor: Yang, Tai-Her, Taipei (TW)
(72) Inventor: Yang, Tai-Her, Taipei (TW)
(74) Representative: Wright, Howard Hugh Burnby

(56) References cited:
- EP-A- 0 508 789
- CH-A- 68 874
- CH-A- 295 476
- DE-C- 164 919
- FR-A- 2 214 073
- FR-A- 2 512 148
- US-A- 3 992 961
- PATENT ABSTRACTS OF JAPAN vol. 9 no. 229 (M-413) [1952] ,14 September 1985 & JP-A-60 084474 (MITSUBISHI DENKI)

## Description

The present invention relates to a kind of double-acting transmission for driving a rotatably driven body in two opposed directions.

Publication number EP 0508789 discloses a double-acting type transmission. A gear is driven by two worms, one of which applies drive, and the other of which controls the rotation of the gear. In this way, backlash is reduced. To do this, the displacement control worm is driven more slowly than the drive worm, and a torsion limiting device in a gear system between the two worms prevents the system from locking up.

According to the present invention, the double-acting transmission for driving a rotatably driven body in two opposed rotational directions and for removing backlash during operation comprises a first prime mover, a second prime mover and the rotatably driven body coupled with each of the first and second prime movers, the first prime mover acting as a driving mover for driving the rotatably driven body in one direction, and the second prime mover acting on the rotatably driven body as a first displacement control body, and the second prime mover acts as a driving body for driving the rotatably driven body in an opposite direction and the first prime mover acts on the rotatably driven body as a second displacement control body acting in a direction opposite to said first displacement control body, the prime movers being worm shafts and the rotatably driven body being a worm gear,
a backlash removing driving system, including a torsion limiting coupling, which restricts the displacement control body to rotate more slowly than the driving body so that no backlash exists between the rotatably driven body and the prime movers, which applies power to the first prime mover to drive the rotatably driven body in the one direction, and to the second prime mover to drive the rotatably driven body in the opposite direction, and which enables changes between the two directions without backlash by virtue of the rotatably driven body being acted on by both prime movers and
a power source for driving the prime movers in which the relationship between the driving speed of the power source as it drives the prime mover is that said driving speed greater than or equal to the speed of the rotatably driven body. Each of the prime movers is connected to a respective prime mover inertia damping device for damping the inertia of the prime mover when the transmission is being halted, each damping device being located between a prime mover and the fixed casing of the transmission, and having a damping force larger than the force resulting from the rotating inertia of the prime movers. Each of the prime movers is connected to a braking device located between that prime mover and the fixed casing and operable to brake that prime mover. The power source is either a common power source for selectively driving the first prime mover to drive the rotatably driven body in the one direction and the second prime mover to drive the rotatably driven body in the opposite direction, the first and second prime movers being connected by the backlash - removing driving system which, for operation with a common power source, includes one-way clutches, or individual independent power sources including a first power source for driving the first prime mover to drive the rotatably driven body in the one direction, and a second power source for driving the second prime mover to drive the rotatably driven body in the opposite direction.

Preferably the transmission further comprises transmission devices disposed between the first power source and the first prime mover, and between the second power source and the second prime mover respectively.

The transmission may also include a control unit for controlling the speed of the first and second power sources so as to drive the driving body faster than the displacement control body.

The control unit may serve to control the power sources such that the speed of the rotatably driven body is regulated on the basis of load, the speed being lower when the load is greater.

According to a first embodiment, the backlash removing driving system includes a first gear mounted on the first prime mover by a torsion limiting coupling,
a second gear mounted on the second prime mover by a one-way driving device and engaged with the first gear,
a third gear mounted on the second prime mover by a torsion limiting coupling and engaged with the first gear, and
a fourth gear mounted on the first prime mover by a one-way transmission and engaged with the third gear,
the second and fourth gears constituting reduction gears, and
   wherein rotation of the first gear in a first direction applies a drive force to the first prime mover and moves the second prime mover via the second gear to permit controlled displacement of the rotatably driven body in one direction, and rotation of the first gear in a second direction applies a driving force to the second prime mover via the third gear and moves the first prime mover via the fourth gear to permit controlled displacement of the rotatably driven body in the opposite direction.

In this embodiment, the first gear may include two gear portions, one of which is an intermediate gear, and the third gear may include two gear portions, one of which is also an intermediate gear, the intermediate gears of the first and third gears being engaged.

According to a second embodiment, the backlash removing driving system includes a first gear mounted on the first prime mover by a one-way driving device,
a second gear mounted on the second prime mover by a torsion limiting coupling and engaged with the first gear,
a third gear mounted on the second prime mover by a one-way device, and
a fourth gear mounted on the first prime mover by a torque limiting device and engaged both with the third gear and with the second gear,
the second and fourth gears constituting accelerating gears, and
   wherein rotation of the first gear in a first direction applies a drive force to the first prime mover and moves the second prime mover via the second gear to permit controlled displacement of the rotatably driven body in the one direction, and
   wherein rotation of the first gear in a second direction applies a drive force to the second prime mover via the third gear and moves the first prime mover via the fourth gear to permit controlled displacement of the rotatably driven body in the opposite direction.

The second gear may include two gear portions, one of which is an intermediate gear, and the fourth gear may include two gear portions, once of which is an intermediate gear, and wherein the intermediate gears of the second and fourth gears are engaged with each other.

According to a third embodiment, the backlash removing driving system includes
a first input gear attached to the first prime mover by a first one-way driving device,
a second gear engaged with the first input gear and attached to the second prime mover by a second one-way driving device,
a third gear attached to the first prime mover by a third one-way driving device,
a fourth gear fixedly attached to the second prime mover so as to rotate therewith and engage with the third gear,
a fifth gear fixedly attached to the first prime mover so as to rotate therewith, and
a sixth gear attached to the second prime mover by a fourth one-way driving device which is engaged with the fifth gear,
   whereby rotation of the first input gear in a first direction causes rotation of the first prime mover in the first direction and rotation of the second prime mover in a second, opposite direction at a lower speed than the first prime mover, and rotation of the first input gear in the second, opposite direction causes rotation of the first prime mover in the second direction and rotation of the second prime mover in the first direction at a speed higher than that of the first prime mover.

In this third embodiment, it is preferred that a first torsion limiting coupling mounted between the third one-way driving device and the first prime mover, and
a second torsion limiting coupling mounted between the fourth one-way driving device and the second prime mover.

The diameter of the first input gear may be substantially equal in diameter to the second gear, and the diameter of the third gear may be less than the diameter of the fourth gear. The diameter of the fifth gear may be greater than the diameter of the sixth gear.

It is also advantageous for the inertia damping device to comprise a mechanical retarding device. Alternatively, the inertia damping device could comprise electromagnetic retarding device.

The breaking device may comprise a mechanical break or an electromagnetic break.

The power source may include one or more pneumatic motors, or one or more fluid actuated motors. A power source could also include electric motors.

It may also be advantageous if the transmission includes an angle displacement monitoring device.

According to another aspect of the invention, a rotary work table includes a bi-directional transmission for rotating the table, the transmission being arranged as above.

Embodiments of the invention are described below by way of example in which:
Figure 1 is a schematic drawing of a first embodiment showing a single power source type transmission for driving a rotatably driven body in a first direction;
Figure 2 is schematic drawing of a second embodiment of the invention;
Figure 3 is schematic drawing of a third embodiment of the present invention with a single power source;
Figure 4 is a schematic drawing of the transmission shown in Figure 3 showing the transfer and distribution of power;
Figure 5 is a schematic drawing of the embodiment shown in Figure 3 showing the transfer of power in a second direction; and
Figure 6 is a schematic drawing of a further embodiment having more than one power source.

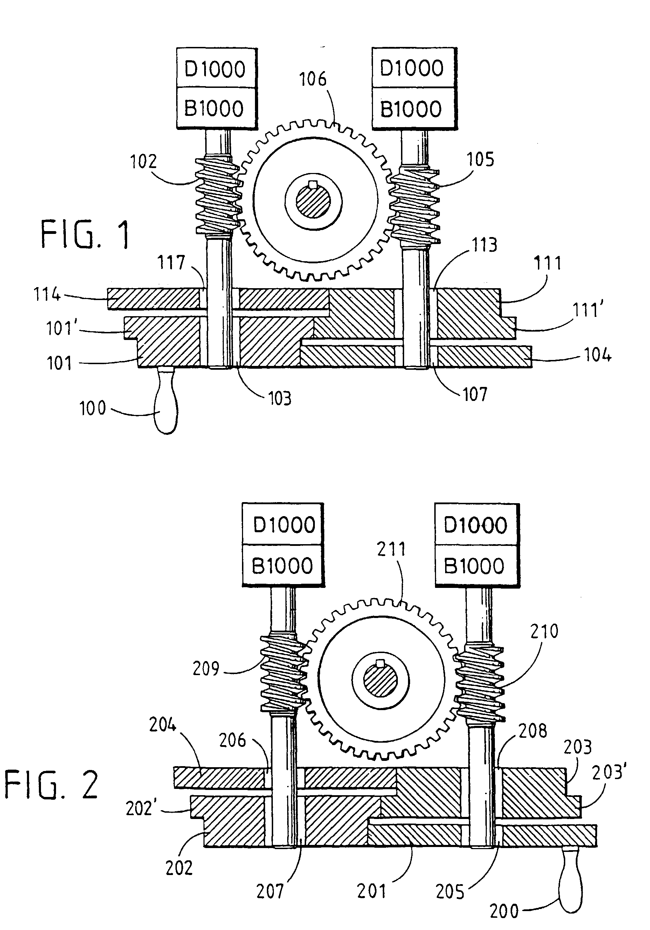

Figure 1 shows a first embodiment with a single power source. The structure shown in Figure 1 is constituted chiefly by:
The pinion gear 101, which acts as a prime mover attached to which is a handle 100 (or other mechanical drive means), rotates in the same direction as the first prime mover worm shaft 102 to couple with and drive the first prime mover worm shaft 102 through a torsion limiting coupling device 103. The pinion gear 101 couples with an oppositely rotating reduction gear 104 to produce reduction and oppositely rotating drive. It couples and is driven by a one-way clutch 107 to drive a second prime mover (displacement control) worm shaft 105 while the reduction gear 104 drives in the opposite direction to drive the rotatably driven body 106. The prime mover worm shaft is driven in common to produce double-acting type dynamic backlash free driving to automatically regulate the speed difference. The second prime mover worm shaft 105 installs with a second prime moving intermediate pinion 111 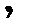 to couple with the displacement control worm shaft 105 via a torsion limiting coupling device 113. The intermediate pinion 111 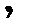 , the linked pinion gear 111 and an oppositely rotating reduction gear 114 on the first prime mover worm shaft are coupled to produce opposite direction rotating power. This drives the intermediate gear 101 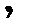 on the first prime mover worm shaft 102, via the coupling driving of a one-way driving device 117 to drive the first worm shaft 105 while the reduction gear 114 drives in the opposite direction, against the rotatably driven body 106 by the first worm shaft 105 to cause the two worm shafts to exchange functions. The driving surface and the retarding surface of the worm gears automatically reduce backlash. The intermediate gear 101 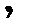 between the first prime mover pinion gear 101 and the second prime mover pinion gear 111 is coupled with the intermediate gear 111 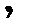 . The two gears rotate in opposite directions to drive the respective worm gears when the handle 100 is driven in one direction or the other. The torsion limiting coupling device can be of the electromagnetic type, or mechanical type. The components are selected on the basis of what is required, such as, umbrella gear, straight gear, or other driving component. An intermediate gear set may be added in accordance with requirements.

A prime mover inertia damping device D1000 is constituted by a retarding device, which may be mechanical sliding friction type, flow force damping type, or electromagnetic eddy current damping type. The device to be installed depends upon the requirement of the system to ensure the damping is larger than the inertia of the worm shaft. The device D1000 should be effective whenever the power source from the driving system comes to a halt or in the course of specific slow down. The inertia damping device D1000 is installed between one end of the two worm shafts and the fixed casing:
An auxiliary braking device B1000 is controlled mechanically or by means of flow force or electromagnetic control depending upon requirements. It performs the action of braking during long lasting still state of the system to ensure the close fitting of the prime movers and the rotatably driven body, and prevent them from being loosened by external force. The braking device B1000 is positioned between one end of the two prime movers and the fixed casing.

Figure 2 shows an embodiment of the transmission where backlash is removed. The system shown in Figure 2 regulates the distribution gear system between the operation input side shown in Figure 1 and the two prime movers to cause the relationship between the driving speed BS of the power source of the force application prime mover B and the driving displacement speed CS of the displacement control prime mover C to be BS ≦ CS. It regulates the speed difference automatically based on the status of the load back clearance, in which BS includes presenting the status of still to provide static pressure. In the opposite direction, the relation will be CS ≦ BS.

The way to constitute the above driving power is described as follows:

Individual power sources drive the system separately. The features of the structure are (1) two driving motors acting as prime mover are controllable torsion running; (2) the driving revolving speeds of the prime mover and the control prime mover are different. The latter is faster. Torsion and speed difference may be controlled electrically or mechanically. The displacement control prime mover can be driven by a stepper motor, servo motor, common AC/DC motor, general mechanical control driving, and the rotary driving kinetic energy, such as, fluid motor, etc.

A single power source combination type driving system is constituted by single rotary power source. This power source may be manual, a stepper motor, a servo motor, an ordinary AC/DC motor, a general mechanical control and driving and fluid motor. The power from the rotary power source worm gear system causes the revolving speed to be transmitted to the prime mover to drive the rotatably driven body at a lower revolving speed then is transmitted to the displacement control prime mover. The rotary power is transmitted to the displacement control prime mover and is coupled with the torsion limiting rotary coupling device via a mechanical or electro-magnetic type radial or axial structure selective coupling torsion and distributes automatically the speed difference between the prime mover in the system and the displacement control prime mover.

The structure shown in Figure 2 is constituted chiefly by:
The bull gear 201 acting as a prime power input and having attached thereto a handle (or means for receiving mechanical drive) which rotates in the same direction as the prime mover worm shaft. It is coupled with the driving prime mover worm shaft 210 by means of a one way clutch 205. An acceleration gear 202 which is coupled with the bull gear 201 to produce acceleration and rotation in the opposite direction. It is coupled and driven through torsion limiting coupling device 207 to make the displacement control worm shaft 209 move while the acceleration gear 202 drives in the opposite direction. It also drives the worm gear set 211 together with the prime mover worm shaft to produce the double-acting type dynamic backlash free driving to automatically regulate the speed difference based on the status of the load back clearance. The displacement control worm shaft 209 carries a second prime mover intermediate gear 202. This is connected to the acceleration gear 202, and couples with the displacement control worm shaft 209 jointly by means of a torsion limiting coupling device 207. The intermediate gear 202 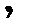 couples with an intermediate gear 203 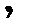 carried by the prime mover worm shaft 210. The intermediate gear 203 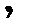 is connected to the pinion gear 203 and coupled with the prime mover worm shaft 210 by means of the torsion limiting device 208; the linked pinion gear 203 applies reduction and reverse rotary power to the reverse reduction gear 204 to be coupled to the other worm shaft 209. A one-way clutch is provided between the reduction gear 204 and the worm shaft 209 to permit the worm shaft 209 to be driven while the reduction gear 204 drives in the opposite direction. The worm shaft drives the worm gear set 211 in the opposite direction to cause the two worm shafts to exchange functions, and the thrust surface and retarding surface of the worm gear will change simultaneously. No backlash will occur at changeover.

The worm inertia damping device D1000 is constituted by typical retarding devices such as, mechanical sliding friction type, flow force damping type, or electromagnetic eddy current damping type. The device which is used depends upon the requirements of the system. The damping should be larger than the inertia of the worm shaft while it is being driven. It damps the inertia of the worm shaft effectively whenever the power source from the driving system comes to a halt or in the course of specific slow down.

The damping device D1000 is installed between one end of the two worm shafts and the fixed casing.

A braking device B1000 which is controlled mechanically or by means of flow force or electromagnetic control according to requirements performs braking action during long lasting still state of the system. This ensures the close fitting of the worm shaft and the worm wheel free from being loosened by external force. The device B1000 is installed between one end of the two worm shafts and the fixed casing.

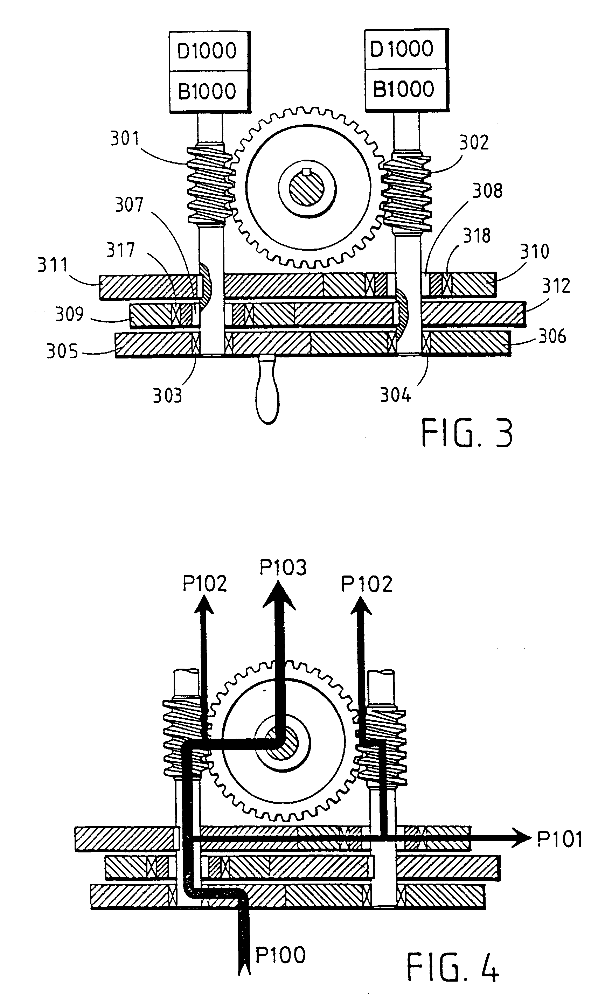

Figure 3 shows an embodiment of the separating type gear train of the single power source transmission system. It divides the gear train on the two sets of worm shaft into three matching sets.

The active prime mover worm shaft 301 and displacement control prime mover worm shaft 302 are coupled respectively with driving gears 305, 306 via one-way driving devices 303, 304 and with driving gears 309, 310 via torsion limiting coupling devices 307, 308 and one-way driving devices 317 and 318 which are provided between the driving gear 309 and the torsion limiting coupling device 307 and between the driving gear 310 and the torsion limiting coupling device 308 respectively. The prime mover worm shaft 301 and the displacement control worm shaft 302 are fixed to driving gears 311, 312 respectively with a key or by other means. The driving gears 311, 310 are coupled with each other with the diameter of the driving gear 311 being larger than the diameter of the driving gear 310. The driving gears 309 and 312 are coupled with each other and the diameter of the driving gear 312 is larger than the diameter of the driving gear 309. The driving gears 305 and 306 are coupled with each other to drive at the same speed;

The coupling of the driving gear sets 305, 306 between the prime mover worm shaft 301 and the displacement control worm shaft 302 via the one-way driving devices 303, 304 in either direction of rotation, one of the gear sets acts as input to transmit motive force to the worm shaft, the other gear set will be idle; and the action will be so in each direction of rotation.

The driving gear train 309 on the prime mover worm shaft 301 is coupled with the prime mover active worm shaft 301 by means of the torsion limiting coupling device 307 and the one-way driving device 317 is clearly joined to 307, and the gear train 309 is coupled with the gear train 312 to be fixed on the follower worm shaft 302 mutually.

The driving gear train 310 on the follower worm shaft 302 is coupled with the follower worm shaft 302 by means of the torsion limiting coupling device 308 and the one-way driving device 318 circularly joined to 308, and the gear train 310 is coupled with the gear train 311 to be fixed on the prime mover worm shaft 301 mutually.

A worm damping device D1000, constituted by typical retarding devices, such as, mechanical slipping friction type, flow force damping type, or electromagnetic eddy current damping type, depending on the requirement of the system, is installed. It ensures that the damping will be larger than the inertia of the worm shaft on the driving of the worm shaft, in order that the worm inertia will be restrained effectively when the power supply from the driving system is interrupted or in the course of specific slow down. The damping device D1000 is installed between one end of the two worm shafts and the fixed casing;

A braking device B1000 is included which may be controlled mechanically, by flow force or electromagnetic control, depending on requirements. The braking operates while the system stays in still state for a long time in order to ensure that the close fitting of the worm shaft and the worm gear is free of loosening by external force. The braking device B1000 is installed between one end of the two worm shafts and the fixed casing.

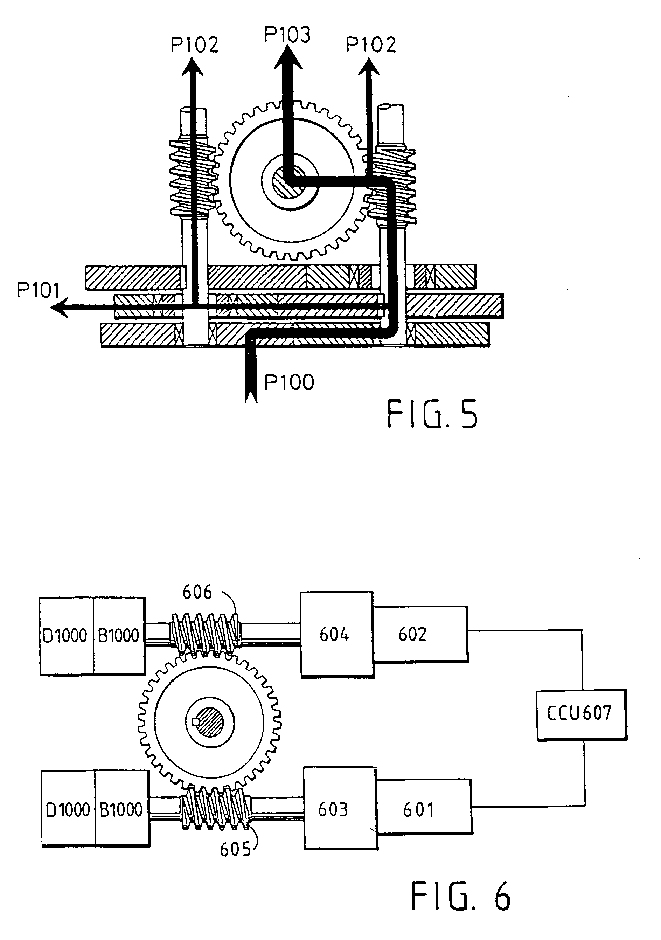

Figure 4 shows the distribution of power resulting from driving the single power source combination driving gear train in one direction. Figure 5 shows the distribution of power resulting from driving of the single power supply combination driving gear train in the other direction. The direction of the flow of power is shown by the arrow in the drawing, in which P100 is the driving input power, P101 is the power loss of the torsion limiting device, P102 is the power loss of the worm shaft gear set, and P103 is the output power.

Figure 6 is an embodiment with separate power sources. The two worm shaft sets are prime mover shaft and displacement control worm shaft coupling with the worm gear set driven directly by two separate rotary power units, or by the transmission of transmission mechanism. The two rotary power units, worm shaft set and the controlled relations of transformation and torsion provide the following features.

Rotary power units 601 and 602 are coupled with respective worm shaft sets 605 and 606 directly or via transmission devices 603 and 604 respectively. The power units may be pneumatic of fluid actuation or electric driving AC/DC motor with or without brushes.

A control unit CCU607 controls the two power units. It provides the following features:

### (1) Controls output revolving speed.

The revolving speed and torsion provide the feature of regulating the speed based on the load, ie the bigger the output torsion, the lesser the revolving speed;

### (2) Controls output torsion.

The torsion against the load will be retained on overloading or retraining;

### (3) Controls direction of rotary power units.

The control of both rotary power units performs relative rotary power units performs relative rotary direction output and unequal speed proportional revolving speed output based on the backlash-free double-acting transmission to decide the absolute driving speed of the worm shaft and worm gear set with slower revolving speed, and form the feature of obverse and reverse changing of direction and no clearance in motion or stationary state of the backlash-free double-acting transmission system.

The following auxiliary device may be added in the above structure further to improve the stability in various driving stated:

A worm inertia damping device D1000 which is constituted by typical damping devices such as, mechanical sliding friction type flow force damping type, or electromagnetic eddy current damping type, depending upon the requirement of the system. This ensures that the retardation is larger than the inertia of the worm shaft while the driving of the worm shaft and restrains the inertia of the worm shaft effective whenever the power source from the driving system comes to a halt or in the course of specific slow down. The worm shaft damping device D1000 is installed between one end of the two worm shafts and the fixed casing.

A brake B1000, which is controlled mechanically or by means of flow force or electromagnetic control depending upon requirement, is installed in order to perform the action of braking during long lasting still state of the system. It ensures the close fitting of the worm shaft and the worm wheel free from being loosened by external force. The brake B1000 is installed between one end of the two worm shafts and the fixed casing.

In addition, in the structure as described in Figures 1-6, it is the embodiment of the single worm gear to coupling with two sets of worm shaft, the practical embodiment allows also to couple the two set so upper and bottom worm gears with individual worm shaft set respectively, and the upper and bottom worm gear sets are combined together on the same spindle. The above two worm shaft sets constitute the prime mover worm shaft and displacement control worm shaft respectively and drive without clearance in both directions as well as still state and motion just the same as the two worm shaft sets in the embodiment shown in Figures 1-6, and the worm shaft may have both to be parallel or in other angle depending upon the requirement of the structure. The relative driving displacement structure of the backlash-free double-acting transmission allows the installation of angle displacement monitoring device in order to reinforce the convenience of operation.

Except the angle displacement regulation of rotary working table mechanism, the application of the backlash-free double-acting transmission should include the no backlash double direction driving of angle displacement for other mechanism or mechanical device.

## Claims

1. A double-acting transmission for driving a rotatably driven body (106, 211) in two opposed rotational directions and for removing backlash during operation comprising a first prime mover (102, 210, 301), a second prime mover (105, 209, 302) and the rotatably driven body (106, 211) coupled with each of the first (102, 210, 301) and second (105, 209, 302) prime movers, the first prime mover (102, 210, 301) acting as a driving mover for driving the rotatably driven body (106, 211) in one direction, and the second prime mover (105, 209, 302) acting on the rotatably driven body (106, 211) as a first displacement control body, and the second prime (105, 209, 302) mover acts as a driving body for driving the rotatably driven body (106, 211) in an opposite direction and the first prime mover (102, 210, 301) acts on the rotatably driven body (106, 211) as a second displacement control body acting in a direction opposite to said first displacement control body, the prime movers being worm shafts and the rotatably driven body(106, 211) being a worm gear,
a backlash removing driving system, including a torsion limiting coupling (103, 113, 207, 208), which restricts the displacement control body to rotate more slowly than the driving body so that no backlash exists between the rotatably driven body (106,211) and the prime movers (102,210,301;105,209,302), which applies power to the first prime mover (102,210,301) to drive the rotatably driven body (106,211) in the one direction, and to the second prime mover (105,209,302) to drive the rotatably driven body (106,211) in the opposite direction, and which enables changes between the two directions without backlash by virtue of the rotatably driven body (106,211) being acted on by both prime movers (102,210,301;105,209,302) and
a power source (100, 200, 300, P100) for driving the prime movers in which the relationship between the driving speed of the power source (100, 200, 300, P100) as it drives the prime mover is that said driving speed is greater than or equal to the speed of the rotatably driven body (106, 211) characterised in that each of the prime movers (102, 210, 301; 105, 209, 302) is connected to a respective prime mover inertia damping device (D1000) for damping the inertia of the prime mover (102, 210, 301; 105, 209, 302) when the transmission is being halted, each damping device (D1000) being located between a prime mover and the fixed casing of the transmission, and having a damping force larger than the force resulting from the rotating inertia of the prime movers, in that each of the prime movers (102, 210, 301,105, 209, 302) is connected to a braking device (B1000) located between that prime mover and the fixed casing and operable to brake that prime mover, and in that the power source is either a common power source for selectively driving the first prime mover (102, 210, 301) to drive the rotatably driven body (106, 211) in the one direction and the second prime mover (105, 209, 302) to drive the rotatably driven body (106, 211) in the opposite direction, the first and second prime movers being connected by the backlash - removing driving system which, for operation with a common power source, includes one-way clutches (107, 117, 205, 206), or individual independent power sources including a first power source (601) for driving the first prime mover (102, 210, 301, 605) to drive the rotatably driven body (106, 211) in the one direction, and a second power source (602) for driving the second prime mover (105, 209, 302, 606) to drive the rotatably driven body (106, 211) in the opposite direction.

2. A transmission according to claim 1, characterised by transmission devices (603, 604) disposed between the first power source (601) and the first prime mover (605), and between the second power source (602) and the second prime mover (606) respectively.

3. A transmission according to claim 1 or 2, characterised by a control unit (CCU607) for controlling the speed of the first and second power sources (601, 602) so as to drive the driving body faster than the displacement control body.

4. A transmission according to claim 3, characterised in_that the control unit (CCU607) serves to control the power sources such that the speed of the rotatably driven body (106, 211) is regulated on the basis of load, the speed being lower when the load is greater.

5. A transmission according to claim 1, characterised in_that the backlash removing driving system includes
a first gear (101) mounted on the first prime mover (102) by a torsion limiting coupling (103),
a second gear (104) mounted on the second prime mover (105) by a one-way driving device (107) and engaged with the first gear (101),
a third gear (111) mounted on the second prime mover (105) by a torsion limiting coupling (113) and engaged with the first gear (101), and
a fourth gear (114) mounted on the first prime mover (102) by a one-way transmission (117) and engaged with the third gear (111),
the second and fourth gears constituting reduction gears, and
wherein rotation of the first gear (101) in a first direction applies a drive force to the first prime mover and moves the second prime mover via the second gear (104) to permit controlled displacement of the rotatably driven body (106) in one direction, and rotation of the first gear (101) in a second direction applies a driving force to the second prime mover (105) via the third gear (111) and moves the first prime mover (102) via the fourth gear (114) to permit controlled displacement of the rotatably driven body (106) in the opposite direction.

6. A transmission according to claim 5, characterised in that the first gear (101) includes two gear portions, one of which is an intermediate gear (101'), and in that the third gear (111) includes two gear portions, one of which is also an intermediate gear (111'), the intermediate gears (101',111') of the first and third gears (101,111) being engaged.

7. A transmission according to claim 1, characterised in that the backlash removing driving system includes:
a first gear (201) mounted on the first prime mover (210) by a one-way driving device (205),
a second gear (202) mounted on the second prime mover (209) by a torsion limiting coupling (207) and engaged with the first gear (201),
a third gear (204) mounted on the second prime mover (209) by a one-way device (206), and
a fourth gear (203) mounted on the first prime mover (210) by a torque limiting device (208) and engaged both with the third gear (204) and with the second gear (202),
the second and fourth gears constituting reverse accelerating gears, and
wherein rotation of the first gear (201) in a first direction applies a drive force to the first prime mover (210) and moves the second prime mover (209) via the second gear (202) to permit controlled displacement of the rotatably driven body (211) in the one direction, and
wherein rotation of the first gear (201) in a second direction applies a drive force to the second prime mover (209) via the third gear (204) and moves the first prime mover (210) via the fourth gear (203) to permit controlled displacement of the rotatably driven body (211) in the opposite direction.

8. A transmission according to claim 7, characterised in that the second gear (202) includes two gear portions, one of which is an intermediate gear (202 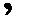 ), and the fourth gear (203) includes two gear portions, one of which is an intermediate gear (203'), and wherein the intermediate gears of the second and fourth gears (202, 203) are engaged with each other.

9. A transmission according to claim 1, characterised in that the backlash removing driving system includes:
a first input gear (305) attached to the first prime mover (301) by a first one-way driving device (303),
a second gear (306) engaged with the first input gear (305) and attached to the second prime mover (302) by a second one-way driving device (304),
a third gear (309) attached to the first prime mover (301) by a third one-way driving device (317),
a fourth gear (312) fixedly attached to the second prime mover (302) so as to rotate therewith and engage with the third gear (309),
a fifth gear (311) fixedly attached to the first prime mover (301) so as to rotate therewith, and
a sixth gear (310) attached to the second prime mover (302) by a fourth one-way driving device (318) which is engaged with the fifth gear (311),
whereby rotation of the first input gear (305) in a first direction causes rotation of the first prime mover (301) in the first direction and rotation of the second prime mover (302) in a second, opposite direction at a lower speed than the first prime mover (301), and rotation of the first input gear (305) in the second, opposite direction causes rotation of the first prime mover (301) in the second direction and rotation of the second prime mover (302) in the first direction at a speed higher than that of the first prime mover (301).

10. A transmission according to claim 9, characterised by a first torsion limiting coupling (307) mounted between the third one-way driving device (317) and the first prime mover (301), and
a second torsion limiting coupling (308) mounted between the fourth one-way driving device (318) and the second prime mover (302).

11. A transmission according to claim 9 or claim 10, characterised in that the diameter of the first input gear (305) is substantially equal in diameter to the second gear (306).

12. A transmission according to any one of claims 9 to 11, characterised in that the diameter of the third gear (309) is less than the diameter of the fourth gear (312).

13. A transmission according to any one of claims 9 to 12, characterised in that the diameter of the fifth gear (311) is greater than the diameter of the sixth gear (310).

14. A transmission according to any one of the preceding claims, characterised in that the inertia damping device (D1000) comprises a mechanical retarding device.

15. A transmission according to any one of claims 1 to 13, characterised in that the inertia damping device (D1000) comprises an electro-magnetic retarding device.

16. A transmission according to any one of claims 1 to 15, characterised in that the braking device (B1000) comprises a mechanical brake.

17. A transmission according to any one of claims 1 to 15, characterised in that the braking device (B1000) comprises an electro-magnetic brake.

18. A transmission according to any one of the preceding claims, characterised in that the power source includes one or more pneumatic motors.

19. A transmission according to any one of claims 1 to 17, characterised in that the power source includes one or more fluid-actuated motors.

20. A transmission according to any one of claims 1 to 17, characterised in that the power source includes electric motors.

21. A transmission according to any one of the preceding claims, further characterised by an angle displacement monitoring device.

22. A rotary work table, including a bi-directional transmission for rotating the table, the transmission being arranged according to any one of the preceding claims.

## Patentansprüche

1. Doppelt wirkende Transmission für den Antrieb eines drehbar angesteuerten Körpers (106, 211) in zwei entgegengesetzten Drehrichtungen und zum Entfernen eines Spiels während des Betriebs, umfassend einen ersten Primärantrieb (102, 210, 301), einen zweiten Primärantrieb (105, 209, 302) und den drehbar angesteuerten Körper (106, 211), der mit jedem der ersten (102, 210, 301) und zweiten (105, 209, 302) Primärantriebe gekoppelt ist, wobei der erste Primärantrieb (102, 210, 301) als ein ansteuernder Antrieb zur Ansteuerung des drehbar angesteuerten Körpers (106, 211) in einer Richtung wirkt und der zweite Primärantrieb (105, 209, 302) auf den drehbar angesteuerten Körper (106, 211) als ein erster Verschiebe-Steuerkörper wirkt, und der zweite Primärantrieb (105, 209, 302) als ein Ansteuerkörper zum Antrieb des drehbar angesteuerten Körpers (106, 211) in einer entgegengesetzten Richtung wirkt und der erste Primärantrieb (102, 210, 301) auf den drehbar angesteuerten Körper (106, 211) als ein zweiter Verschiebe-Steuerkörper wirkt, der in einer Richtung entgegengesetzt dem ersten Verschiebe-Steuerkörper wirkt, wobei die Primärantriebe Schneckenwellen sind und der drehbar angesteuerte Körper (106, 211) ein Schneckengetriebe ist,
ein Spielentfernungs-Ansteuersystem, umfassend eine Torsions-Begrenzungskupplung (103, 113, 207, 208), die den Verschiebe-Steuerkörper zwingt, langsamer zu drehen als der Ansteuerkörper, so daß kein Spiel zwischen dem drehbar angesteuerten Körper (106, 211) und den Primärantrieben (102, 210, 301; 105, 209, 302) vorliegt, welches Leistung dem ersten Primärantrieb (102, 210, 301) zuführt, um den drehbar angesteuerten Körper (106, 211) in der einen Richtung anzusteuern und dem zweiten Primärantrieb (105, 209, 302) Leistung zuführt, um den drehbar angesteuerten Körper (106 211) in der entgegengesetzten Richtung anzusteuern und welches Änderungen zwischen den zwei Richtungen ohne Spiel aufgrund der Tatsache gestattet, daß auf den drehbar angesteuerten Körper (106, 211) durch beide Primärantriebe (102, 210, 301; 105, 209, 302) eingewirkt wird, und
eine Leistungsquelle (100, 200, 300, P100) zur Ansteuerung der Primärantriebe, wobei die Beziehung zwischen der Antriebsgeschwindigkeit der Leistungsquelle (100, 200, 300, P100), wenn sie den Primärantrieb ansteuert, so ist, daß die Antriebsgeschwindigkeit größer oder gleich der Geschwindigkeit des drehbar angesteuerten Körpers (106, 211) ist, dadurch gekennzeichnet, daß jeder der Primärantriebe (102, 210, 301; 105, 209, 302) mit einer entsprechenden Primärantriebs-Massendämpfungseinrichtung (D1000) zur Dämpfung der Masse des Primärantriebes (102, 210 301; 105, 209, 302) verbunden ist, wenn die Transmission angehalten wird, wobei jede Dämpfungseinrichtung (D1000) zwischen einem Primärantrieb und dem festen Gehäuse der Transmission angeordnet ist und eine Dämpfungskraft besitzt, die größer als die Kraft ist, die aus dem Massenmoment der Primärantriebe resultiert, indem jeder der Primärantriebe (102, 210, 301, 105, 209, 302) mit einer Bremseinrichtung (B1000) verbunden ist, die zwischen diesem Primärantrieb und dem festen Gehäuse angeordnet ist und betätigt wird, um den Primärantrieb zu bremsen, und daß die Leistungsquelle entweder eine gemeinsame Leistungsquelle ist, um selektiv den ersten Primärantrieb (102, 210, 301) anzusteuern und den drehbar angesteuerten Körper (106, 211) in der einen Richtung und den zweiten Primärantrieb (105, 209, 302) anzusteuern und den drehbar angesteuerten Körper (106, 211) in der entgegengesetzten Richtung anzusteuern, wobei die ersten und zweiten Primärantriebe durch das Spielentfernungs-Ansteuersystem verbunden sind, welches zum Betrieb mit einer gemeinsamen Leistungsquelle Einwegkupplungen (107, 117, 205, 206) umfaßt, oder individuell unabhängige Leistungsquellen vorgesehen sind, die eine erste Leistungsquelle (601) zur Ansteuerung des ersten Primärantriebes (102, 210, 301, 605) umfassen, um den drehbar angesteuerten Körper (106, 211) in der einen Richtung anzusteuern und eine zweite Leistungsquelle (602) zur Ansteuerung des zweiten Primärantriebes (105, 209, 302, 606) umfassen, um den drehbar angesteuerten Körper (106, 211) in der entgegengesetzten Richtung anzusteuern.

2. Transmission nach Anspruch 1, gekennzeichnet durch Transmissionseinrichtungen (603, 604), die zwischen der ersten Leistungsquelle (601) und dem ersten Primärantrieb (605) und zwischen der zweiten Leistungsquelle (602) und dem zweiten Primärantrieb (606) entsprechend angeordnet sind.

3. Transmission nach Anspruch 1 oder 2, gekennzeichnet durch eine Steuereinheit (CCU607) zur Steuerung der Geschwindigkeit der ersten und zweiten Leistungsquellen (601, 602), um den Ansteuerkörper schneller als den Verschiebe-Steuerkörper anzusteuern.

4. Transmission nach Anspruch 3, dadurch gekennzeichnet, daß die Steuereinheit (CCU607) dazu dient, die Leistungsquellen so zu steuern, daß die Geschwindigkeit des drehbar angesteuerten Körpers (106, 211) auf der Grundlage der Last geregelt wird, wobei die Geschwindigkeit geringer ist, wenn die Last größer ist.

5. Transmission nach Anspruch 1, dadurch gekennzeichnet, daß das Spielentfernungs-Ansteuersystem umfaßt
ein erstes Zahnrad (101), das auf dem ersten Primärantrieb (102) durch eine Torsions-Begrenzungskupplung (103) gelagert ist,
ein zweites Zahnrad (104), das auf dem zweiten Primärantrieb (105) durch eine Einweg-Steuereinrichtung (107) gelagen ist und sich mit dem ersten Zahnrad (101) im Eingriff befindet,
ein drittes Zahnrad (111), das auf dem zweiten Primärantrieb (105) durch eine Torsions-Begrenzungskupplung (113) gelagen ist und sich mit dem ersten Zahnrad (101) im Eingriff befindet und
ein viertes Zahnrad (114), das auf dem ersten Primärantrieb (102) durch eine Einweg-Transmission (117) gelagert ist und sich mit dem dritten Zahnrad (111) in Eingriff befindet,
wobei die zweiten und vierten Zahnräder Reduktionsgetriebe bilden, und
wobei die Drehung des ersten Zahnrades (101) in einer ersten Richtung eine Ansteuerkraft an den ersten Primärantrieb anlegt und den zweiten Primärantrieb über das zweite Zahnrad (104) bewegt, uni eine gesteuerte Verschiebung des drehbar angesteuerten Körpers (106) in einer Richtung zu gestatten und wobei die Drehung des ersten Zahnrades (101) in einer zweiten Richtung eine Ansteuerkraft an den zweiten Primärantrieb (105) über das dritte Zahnrad (111) anlegt und den ersten Primärantrieb (102) über das vierte Zahnrad (114) bewegt, um eine gesteuerte Verschiebung des drehbar angesteuerten Körpers (106) in der entgegengesetzten Richtung zu gestatten.

6. Transmission nach Anspruch 5, dadurch gekennzeichnet, daß das erste Zahnrad (101) zwei Zahnradteile umfaßt, von denen einer ein Zwischen-Zahnrad (101') ist, und daß das dritte Zahnrad (111) zwei Zahnradteile umfaßt, von denen einer ein Zwischenzahnrad (111') ist, wobei sich die Zwischenzahnräder (101', 111') der ersten und dritten Zahnräder (101, 111) im Eingriff befinden.

7. Transmission nach Anspruch 1, dadurch gekennzeichnet, daß das Spielentfernungs-Ansteuersystem umfaßt:
ein erstes Zahnrad (201), das auf dem ersten Primärantrieb (210) durch eine Einweg-Ansteuereinrichtung (205) gelagen ist,
ein zweites Zahnrad (202), das auf dem zweiten Primärantrieb (209) durch eine Torsions-Begrenzungskupplung (207) gelagen ist und sich mit dem ersten Zahnrad (201) im Eingriff befindet,
ein drittes Zahnrad (204), das auf dem zweiten Primärantrieb durch eine Einweg-Ansteuereinrichtung (206) gelagert ist, und
ein viertes Zahnrad (203), das auf dem erste Primärantrieb (210) durch eine Drehmoment-Begrenzungseinrichtung (208) gelagert ist und sich sowohl mit dem dritten Zahnrad (204) als auch mit dem zweiten Zahnrad (202) im Eingriff befindet,
wobei die zweiten und vierten Zahnräder Umkehr-Beschleunigungsgetriebe bilden, und
wobei die Drehung des ersten Zahnrades (201) in einer ersten Richtung eine Ansteuerkraft an den ersten Primärantrieb (210) anlegt und den zweiten Primärantrieb (209) über das zweite Zahnrad (202) bewegt, um eine gesteuerte Verschiebung des drehbar angesteuerten Körpers (211) in der einen Richtung zu gestatten, und
wobei die Drehung des ersten Zahnrades (201) in einer zweiten Richtung eine Ansteuerkraft an den zweiten Primärantrieb (209) über das dritte Zahnrad (204) anlegt und den ersten Primärantrieb (210) über das vierte Getriebe (203) bewegt, um eine gesteuerte Verschiebung des drehbar angesteuerten Körpers (211) in der entgegengesetzten Richtung zu gestatten.

8. Transmission nach Anspruch 7, dadurch gekennzeichnet, daß das zweite Zahnrad (202) zwei Zahnradteile umfaßt, von denen einer ein Zwischenzahnrad (202') ist, und daß das vierte Zahnrad (203) zwei Zahnradteile umaßt, von denen einer ein Zwischenzahnrad (203') ist und wobei die Zwischenzahnräder der zweiten und vierten Zahnräder (202, 203) sich miteinander im Eingriff befinden.

9. Transmission nach Anspruch 1, dadurch gekennzeichnet, daß das Spielentfernungs-Ansteuersystem umfaßt:
ein erstes Eingangszahnrad (305), das mit dem ersten Primärantrieb (301) durch eine erste Einweg-Ansteuereinrichtung (303) verbunden ist,
ein zweites Zahnrad (306), das sich mit dem ersten Eingangszahnrad (305) im Eingriff befindet und mit dem zweiten Primärantrieb (302) durch eine zweite Einweg-Ansteuereinrichtung (304) verbunden ist,
ein drittes Zahnrad (309), das mit dem ersten Primärantrieb (301) durch eine dritte Einweg-Ansteuereinrichtung (317) verbunden ist,
ein viertes Zahnrad (312), das fest mit dem zweiten Primärantrieb (302) verbunden ist, um mit diesem zu rotieren und sich mit dem dritten Zahnrad (309) im Eingriff zu befinden,
ein fünftes Zahnrad (311), das fest mit dem ersten Primärantrieb (301) verbunden ist, um mit diesem zu rotieren, und
ein sechstes Zahnrad (310), das mit dem zweiten Primärantrieb (302) durch eine vierte Einweg-Ansteuereinrichtung (318) verbunden ist und welches sich im Eingriff mit dem fünften Zahnrad (311) befindet,
wobei die Drehung des ersten Eingangszahnrades (305) in einer ersten Richtung eine Drehung des ersten Primärantriebes (301) in der ersten Richtung und eine Drehung des zweiten Primärantriebes (302) in einer zweiten entgegengesetzten Richtung mit einer niedrigeren Geschwindigkeit als die des ersten Primärantriebes (301) hervorruft und die Drehung des ersten Eingangszahnrades (305) in der zweiten entgegengesetzten Richtung eine Drehung des ersten Primärantriebes (301) in der zweiten Richtung und eine Drehung des zweiten Primärantriebes (302) in der ersten Richtung mit einer Geschwindigkeit hervorruft, die größer als die des ersten Primärantriebes (301) ist.

10. Transmission nach Anspruch 9, gekennzeichnet durch eine erste Torsions-Begrenzungskupplung (307), die zwischen der dritten Einweg-Ansteuereinrichtung (317) und dem ersten Primärantrieb (301) angeordnet ist, und
eine zweite Torsions-Begrenzungskupplung (308), die zwischen der vierten Einweg-Ansteuereinrichtung (318) und dem zweiten Primärantrieb (302) angeordnet ist.

11. Transmission nach Anspruch 9 oder Anspruch 10, dadurch gekennzeichnet, daß der Durchmesser des ersten Eingangszahnrades (305) im wesentlichen gleich dem Durchmesser des zweiten Zahnrades (306) ist.

12. Transmission nach irgendeinem der Ansprüche 9 bis 11, dadurch gekennzeichnet, daß der Durchmesser des dritten Zahnrades (309) geringer als der Durchmesser des vierten Zahnrades (312) ist.

13. Transmission nach irgendeinem der Ansprüche 9 bis 12, dadurch gekennzeichnet, daß der Durchmesser des fünften Zahnrades (311) größer als der Durchmesser des sechsten Zahnrades (310) ist.

14. Transmission nach irgendeinem der vorhergehenden Ansprüche, dadurch gekennzeichnet, daß die Massen-Dämpfungseinrichtung (D1000) eine mechanische Verzögerungseinrichtung umaßt.

15. Transmission nach irgendeinem der Ansprüche 1 bis 13, dadurch gekennzeichnet, daß die Massen-Dämpfungseinrichtung (D1000) eine elektromagnetische Verzögerungseinrichtung umläßt.

16. Transmission nach irgendeinem der Ansprüche 1 bis 15, dadurch gekennzeichnet, daß die Bremseinrichtung (B1000) eine mechanische Bremse umfaßt.

17. Transmission nach irgendeinem der Ansprüche 1 bis 15, dadurch gekennzeichnet, daß die Bremseinrichtung (B1000) eine elektromagnetische Bremse umfaßt.

18. Transmission nach irgendeinem der vorhergehenden Ansprüche, dadurch gekennzeichnet, daß die Leistungsquelle einen oder mehrere pneumatische Motoren umfaßt.

19. Transmission nach irgendeinem der Ansprüche 1 bis 17, dadurch gekennzeichnet, daß die Leistungsquelle einen oder mehrere durch ein Fluid betätigte Motoren umfaßt.

20. Transmission nach irgendeinem der Ansprüche 1 bis 17, dadurch gekennzeichnet, daß die Leistungsquelle elektrische Motoren umfaßt.

21. Transmission nach irgendeinem der vorherigen Ansprüche, ferner gekennzeichnet durch eine Winkelverschiebungs-Überwachungseinrichtung.

22. Drehbarer Arbeitstisch, umfassend eine bidirektionale Transmission zum Drehen des Tisches, wobei die Transmission gemäß irgendeinem der vorhergehenden Ansprüche ausgebildet ist.

## Revendications

1. Transmission à double action pour l'entraînement d'un corps entraîné en rotation (106,211) dans deux directions de rotation opposées et pour éliminer le jeu en retour lors du fonctionnement, comprenant:
un premier moteur principal (102, 210, 301), un second moteur principal (105, 209,302) et le corps entraîné en rotation (106, 211) couplé avec chacun du premier moteur principal (102,210,301) et du second moteur principal (105,209,302), le premier moteur principal (102,210,301) agissant comme un moteur d'entraînement pour entraîner le corps entraîné en rotation (106,211) dans une direction, et le second moteur principal (105,209,302) agissant sur le corps entraîné en rotation (106,211) comme un premier corps de commande de déplacement, et dans lequel le second moteur principal (105,209,302) agit comme un corps d'entraînement pour entraîner le corps entraîné en rotation (106,211) dans une direction opposée et le premier moteur principal (102,210,301) agit sur le corps entraîné en rotation (106,211) comme un second corps de commande de déplacement agissant dans une direction opposée à celle du premier corps de commande de déplacement, les moteurs principaux étant des vis sans fin et le corps entraîné en rotation (106,211) étant un pignon de vis sans fin,
un système d'entraînement à suppression de jeu en retour, comprenant un couplage à limitation de torsion (103, 113,207,208) qui limite la commande de déplacement du corps pour qu'elle tourne plus lentement que le corps d'entraînement de sorte que aucun jeu en retour n'existe entre le corps entraîné en rotation (106,211) et les moteurs principaux (102,210,301; 105,209,302), lequel applique une puissance au premier moteur principal (102,210,301) pour entraîner le corps entraîné en rotation (106,211) dans une direction, et au second moteur principal (105,209,302) pour entraîner le corps entraîné en rotation (106,211) dans la direction opposée, et qui permet des modifications entre les deux directions sans jeu en retour du fait que le corps entraîné en rotation (106,211) est actionné à la fois par les deux moteurs principaux (102,210,301 ; 105,209,302) et
une source de puissance (100,200,300,P100) pour entraîner les moteurs principaux dans laquelle la relation entre la vitesse d'entraînement de la source de puissance (100,200,300,P100) tandis qu'elle entraîne le moteur principal est telle que ladite vitesse d'entraînement est supérieure ou égale à la vitesse du corps entraîné an rotation (106,211), caractérisée an ce que chacun des moteurs principaux (102,210,301; 105,209,302) est relié à un dispositif d'amortissement d'inertie de moteur principal respectif (D1000) pour amortir l'inertie du moteur principal (102,210,301; 105,209,302) lorsqu'on arrête la transmission, chaque dispositif d'amortissement (D1000) étant disposé entre un moteur principal et le boîtier fixe de transmission, et présentant une force d'amortissement supérieure à la force résultant de l'inertie de rotation des moteurs principaux, en ce que chacun des moteurs principaux (102,210,301, 105,209,302) est relié à un dispositif de freinage (B1000) situé entre le moteur principal et le boîtier fixe et est actionnable pour freiner le moteur principal, et an ce que la source de puissance est soit une source de puissance commune pour entraîner sélectivement le premier moteur principal (102,210,301) pour entraîner le corps entraîné en rotation (106,211) dans une direction et le second moteur principal (105,209,302) pour entraîner le corps entraîné an rotation (106,211) dans la direction opposée, le premier et le second moteurs principaux étant reliés par le système d'entraînement à élimination du jeu an retour qui comprend, pour le fonctionnement avec une source de puissance commune, des embrayages unidirectionnels (107, 117,205,206), ou des sources de puissance indépendantes individuelles comprenant une première source de puissance (601) pour entraîner le premier moteur principal (102,210,301,605) pour entraîner le corps entraîné en rotation (106,211) dans une direction, et une seconde source de puissance (602) pour entraîner le second moteur principal (105,209,302,606) pour entraîner le corps entraîné an rotation (106,211) dans la direction opposée.

2. Transmission selon la revendication 1, caractérisée par des dispositifs de transmission (603,604) disposés entre la première source de puissance (601) et le premier moteur principal (605), et entre la seconde source de puissance (602) et le second moteur principal (606), respectivement.

3. Transmission selon la revendication 1 ou 2, caractérisée par une unité de commande (CCU607) pour contrôler la vitesse des première et seconde sources de puissance (601,602) de façon à entraîner le corps d'entraînement plus vite que le corps de commande de déplacement.

4. Transmission selon la revendication 3, caractérisée en ce que l'unité de commande (CCU607) sert à contrôler les sources de puissance de façon que la vitesse du corps entraîné en rotation (106,211) soit réglée sur la base de la charge, la vitesse étant inférieure lorsque la charge est supérieure.

5. Transmission selon la revendication 1, caractérisée en ce que le système d'entraînement à suppression de jeu comprend :
un premier pignon (101) monté sur le premier moteur principal (102) par l'intermédiaire d'un couplage (103) de limitation de torsion,
un second pignon (104) monté sur le second moteur principal (105) par l'intermédiaire d'un dispositif d'entraînement unidirectionnel (107) et qui s'engage avec le premier pignon (101),
un troisième pignon (111) monté sur le second moteur principal (105) par l'intermédiaire d'un couplage (113) de limitation de torsion et qui s'engage avec le premier pignon (101), et
un quatrième pignon (114) monté sur le premier moteur principal (102) par une transmission (117) unidirectionnelle et qui s'engage avec le troisième pignon (111),
le second et le quatrième pignons constituant des pignons réducteurs, et
dans laquelle la rotation du premier pignon (101) dans une première direction applique une force d'entraînement au premier moteur principal et déplace le second moteur principal par l'intermédiaire du second pignon (104) de façon à permettre un déplacement contrôlé du corps entraîné en rotation (106) dans une direction, et la rotation du premier pignon (101) dans une seconde direction applique une force d'entraînement au second moteur principal (105) par l'intermédiaire du, troisième pignon (111) et déplace le premier moteur principal (102) par l'intermédiaire du quatrième pignon (114) de façon à permettre le déplacement contrôlé du corps entraîné en rotation (106) dans la direction opposée.

6. Transmission selon la revendication 5, caractérisée en ce que le premier pignon (101) comprend deux parties de pignon, dont l'une constitue un pignon intermédiaire (101'), et en ce que le troisième pignon (111) comprend deux parties de pignon, dont l'une constitue également un pignon intermédiaire (111'), les pignons intermédiaires (101', 111') du premier et du troisième pignon (101, 111) étant en engagement.

7. Transmission selon la revendication 1, caractérisée en ce que le système d'entraînement à suppression de jeu comprend :
un premier pignon (201) monté sur le premier moteur principal (210) au moyen d'un dispositif d'entraînement unidirectionnel (205),
un second pignon (202) monté sur le second moteur principal (209) au moyen d'un couplage de limitation en torsion (207) et qui s'engage avec le premier pignon (201),
un troisième pignon (204) monté sur le second moteur principal (209) au moyen d'un dispositif unidirectionnel (206), et
un quatrième pignon (203) monté sur le premier moteur principal (210) au moyen d'un dispositif de limitation en torsion (208) et qui s'engage à la fois avec le troisième pignon (204) et avec le second pignon (202), le second et le quatrième pignons constituant des pignons d'accélération inverse, et
dans laquelle la rotation du premier pignon (201) dans une première direction applique une force d'entraînement au premier moteur principal (210) et déplace le second moteur principal (209) par l'intermédiaire du second pignon (202) de façon à permettre le déplacement contrôlé du corps entraîné en rotation (211) dans une direction, et
dans laquelle la rotation du premier pignon (201) dans une seconde direction applique une force d'entraînement au second moteur principal (209) par l'intermédiaire du troisième pignon (204) et déplace le premier moteur principal (210) par l'intermédiaire du quatrième pignon (203) de façon à permettre le déplacement contrôlé du corps entraîné en rotation (211) dans la direction opposée.

8. Transmission selon la revendication 7, caractérisée en ce que le second pignon (202) comprend deux parties de pignon, dont l'une constitue un pignon intermédiaire (202'), et le quatrième pignon (203) comprend deux parties de pignon, dont l'une constitue un pignon intermédiaire (203'), et dans laquelle les pignons intermédiaires du second et du quatrième pignons (202,203) s'engagent l'un avec l'autre.

9. Transmission selon la revendication 1, caractérisée en ce que le système d'entraînement à suppression de jeu comprend :
un premier pignon d'entrée (305) fixé au premier moteur principal (301) au moyen d'un premier dispositif d'entraînement unidirectionnel (303),
un second pignon (306) s'engageant avec le premier pignon d'entrée (305) et fixé au second moteur principal (302) au moyen d'un second dispositif d'entraînement unidirectionnel (304),
un troisième pignon (309) fixé au premier moteur principal (301) par un troisième dispositif d'entraînement unidirectionnel (317),
un quatrième pignon (312) fixé à demeure au second moteur principal (302) de façon à tourner avec lui et s'engager avec le troisième pignon (309),
un cinquième pignon (311) fixé à demeure au premier moteur principal (301) de façon à tourner avec lui, et
un sixième pignon (310) fixé au second moteur principal (302) par un quatrième dispositif d'entraînement unidirectionnel (318) qui s'engage avec le cinquième pignon (311),
grâce à quoi la rotation du premier pignon d'entrée (305) dans une première direction provoque la rotation du premier moteur principal (301) dans la première direction et la rotation du second moteur principal (302) dans une seconde direction opposée à une vitesse inférieure à celle du premier moteur principal (301), et la rotation du premier pignon d'entrée (305) dans la seconde direction opposée provoque la rotation du premier moteur principal (301) dans la seconde direction et la rotation du second moteur principal (302) dans la première direction à une vitesse supérieure à celle du premier moteur principal (301).

10. Transmission selon la revendication 9, caractérisée par un premier couplage de limitation de torsion (307) monté entre le troisième dispositif d'entraînement unidirectionnel (317) et le premier moteur principal (301), et
un second couplage de limitation de torsion (308) monté entre le quatrième dispositif d'entraînement unidirectionnel (318) et le second moteur principal (302).

11. Transmission selon la revendication 9 ou la revendication 10, caractérisée en ce que le diamètre du premier pignon d'entrée (305) est sensiblement égal à celui du second pignon (306).

12. Transmission selon l'une quelconque des revendication 9 à 11, caractérisée en ce que le diamètre du troisième engrenage (309) est inférieur au diamètre du quatrième engrenage (312).

13. Transmission selon l'une quelconque des revendication 9 à 12, caractérisée en ce que le diamètre du cinquième engrenage (311) est supérieur au diamètre du sixième engrenage (310).

14. Transmission selon l'une quelconque des revendications précédentes, caractérisée en ce que le dispositif d'amortissement d'inertie (D 1000) comprend un dispositif de retardement mécanique.

15. Transmission selon l'une quelconque des revendications 1 à 13, caractérisée en ce que le dispositif d'amortissement d'inertie (D 1000) comprend un dispositif de retardement électromagnétique.

16. Transmission selon l'une quelconque des revendications 1 à 15, caractérisé en ce que le dispositif de freinage (B 1000) comprend un frein mécanique.

17. Transmission selon l'une quelconque des revendications 1 à 15, caractérisée en ce que le dispositif de freinage (B 1000) comprend un frein électromagnétique.

18. Transmission selon l'une quelconque des revendications précédentes, caractérisée en ce que la source de puissance comprend un ou plusieurs moteurs pneumatiques.

19. Transmission selon l'une quelconque des revendications 1 à 17, caractérisée en ce que la source de puissance comprend un ou plusieurs moteurs actionnés par un fluide.

20. Transmission selon l'une quelconque des revendications 1 à 17, caractérisée en ce que la source de puissance comprend des moteurs électriques.

21. Transmission selon l'une quelconque des revendications précédentes, caractérisée en outre par un dispositif de contrôle de déplacement d'angle.

22. Table de travail tournante, comprenant une transmission bidirectionelle, la transmission étant disposée selon l'une quelconque des revendications précédentes.
